(19) Europäisches Patentamt
European Patent Office
Office européen des brevets

(11) **EP 2 846 480 B1**

(12) **EUROPEAN PATENT SPECIFICATION**

(45) Date of publication and mention
of the grant of the patent:
**23.08.2017 Bulletin 2017/34**

(51) Int Cl.:
*H04B 10/071* $^{(2013.01)}$

(21) Application number: **13306242.2**

(22) Date of filing: **10.09.2013**

(54) **Method and device for measuring a link loss of an optical transmission line**

Verfahren und Vorrichtung zur Messung eines Verbindungsausfalls einer optischen Übertragungsleitung

Procédé et dispositif pour mesurer une perte de liaison d'une ligne de transmission optique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.03.2015 Bulletin 2015/11**

(73) Proprietor: **ALCATEL LUCENT**
**92100 Boulogne-Billancourt (FR)**

(72) Inventors:
• **Dupuis, Nicolas**
 **6041 Gosselies (BE)**
• **Meersman, Stijn**
 **2018 Antwerp (BE)**

(74) Representative: **ALU Antw Patent Attorneys**
**Copernicuslaan 50**
**2018 Antwerpen (BE)**

(56) References cited:
**WO-A1-2010/076567**

• **KWANIL LEE ET AL: "Fiber Link Loss monitoring scheme in bidirectional WDM transmission using ASE-injected FP-LD", IEEE PHOTONICS TECHNOLOGY LETTERS, IEEE SERVICE CENTER, PISCATAWAY, NJ, US, vol. 18, no. 3, 1 February 2006 (2006-02-01), pages 523-525, XP009093930, ISSN: 1041-1135, DOI: 10.1109/LPT.2005.863991**

## Description

### Field of the invention

The present invention refers to a method and device for measuring a link loss of an optical transmission line. The invention further refers to a monitoring station for an access network comprising such a device and to a computer program product programmed for executing such a method.

### Background

In the recent years, the demand for high-bandwidth services provided over access networks such as IP television (IPTV) and Video-On-Demand has increased. Moreover, network operators have started to introduce Triple-Play services (internet access, television and Voice Over IP telephony) to the market. As a consequence, both the maximum bit rate as well as the availability provided to the subscribers of the network must be increased. In order to monitor or even to improve the quality of service offered by the access network, several tests may be performed on the access network. In particular when applying an optical access network like a Passive Optical Network (PON), an Optical Time Domain Reflectometer (OTDR) may be used in order to check optical transmission lines and to diagnose defects in the line. The OTDR may also be used to locate the defect.

The most common approach for implementing an OTDR is to install a separate laser dedicated to the OTDR in a central place of the network, such as a central office and to feed an optical test signal generated by the laser into the PON by means of a wavelength division multiplexer. This approach is referred to as "external OTDR". The OTDR is arranged for generating trace data that describe a response signal received by the reflectometer. Typically, the trace data are visualized in the form of a diagram showing signal level over a distance.

Because using the separate laser and the wavelength division multiplexer is costly and occupies space in the central office, it has been proposed to integrate OTDR functions into an optical transceiver module for an Optical Line Termination (OLT) of a PON. The ODTR integrated into the optical transceiver module is often referred to as "embedded ODTR". In existing products, optical transceiver modules with integrated OTDR functionality are available as Small form Factor Pluggable (SFP) transceivers.

In particular during installation of an optical network, the link loss of a transmission line of the network, i.e. the link loss between two arbitrarily chosen points within the network, often needs to be measured. If the measured link loss (in downstream or upstream direction) is above a predefined value then the installation will not be validated because the risk that the desired quality of service, in particular a desired bitrate, cannot be reached would be too high.

It is known to determine the link loss based on received signal power measurements performed by nodes connected to the network. However, a so determined value of the link loss is not very accurate.

In order to obtain a more accurate link loss value, special test equipment can be installed at both sides of the transmission line under test. Installing the test equipment, however, is expensive because of the time needed to install it and the cost of the test equipment itself.

In the published patent application WO 2010/076567 A1, devices and methods for optical measurements in PONs are disclosed. According to these devices and methods, reflected power from known reflections at the end of lines is used to determine the attenuation and stability of each line.

### Summary

The object of the present invention is to provide a method and device for measuring a link loss that can determine the link sufficiently accurately and that is easy to use and cost-effective.

This object is solved by a method according to claim 1 and a device according to claim 9. Moreover, a monitoring station according to claim 11 and a computer program product according to claim 12 are provided.

According to an embodiment of the present invention, a method for measuring a link loss of an optical transmission line is provided, the method comprising retrieving trace data describing an optical time domain reflectometry trace; and estimating the link loss from the trace data. When relying on trace data obtained by optical time domain reflectometry instead of relying on received signal power measurements, the link loss can be obtained more accurately. As a consequence, the link loss can easily be verified during installation of an optical network such as a PON. When it turns out that the link loss is too high on a certain transmission line within the network then a field technician can verify the transmission line before proceeding with the installation of the network.

In an embodiment, the method comprises retrieving a first set of the trace data, said first set being based on the optical time domain reflectometry performed by means of an optical time domain reflectometer connected to a first end of the transmission line without a reflector being inserted at a second end of the transmission line; and retrieving a second set of the trace data, the second set being based on the optical time domain reflectometry performed by means of the time domain reflectometer connected to the first end of the transmission line while the reflector is inserted at the second end of the transmission line; wherein the estimating the link loss comprises comparing the first set of trace data with the second set of trace data. In a preferred embodiment, the reflector has fixed reflection characteristics, in particular a fixed reflection factor. Performing the optical time domain reflectometry without having the reflector inserted means avoiding reflections at the second end or at least avoiding reflections that are characteristic for the reflector to be inserted at the second end.

When generating the first set of trace data without reflector, installing the reflector and then generating the second set of trace data with the reflector being installed, a position (i.e. distance value) within the reflectometry trace can easily be determined that corresponds to the second end of the transmission line. Therefore, the link loss can be determined in cases where the length of the transmission line is not known. However, in cases where the length of the optical transmission line for which the link loss shall be determined (transmission line under test) is known, the link loss may also be determined using a single set of trace data.

In an embodiment, comparing the two sets of trace data comprises searching for a peak in an optical time domain reflectometry trace described by the first set that is not present in the time domain reflectometry trace described by the second set.

In a preferred embodiment, determining the signal level comprises determining a peak level of the peak and calculating the link loss from the peak level and a correction value. The peak level can be detected without difficulties although long transmission lines under test lead to small signal levels within the reflectometry trace. The peak level is much higher than the signal level of the reflectometry trace around the peak. Thus, the peak level can reliably be detected despite of a limited dynamic range of the used optical time domain reflectometer. Calculating the link loss may include e.g. subtracting the correction value from the link loss when using logarithmically scaled values for the peak level or other signal levels (or multiplying the peak level with the correction value in case of linearly-scaled values).

In an embodiment, the correction value is calculated from a reflection factor of the reflector, a backscatter efficiency of the transmission line, an attenuation per length unit of the transmission line and/or a pulse width of a pulse of a test signal fed into the transmission line by the reflectometer. Preferably all before-mentioned parameters are used for calculating the correction value in order to further improve the accuracy of the method.

In another embodiment, the method comprises determining a signal level of the trace described by the second set of trace data at a start of the peak and estimating the link loss from this signal level.

In a preferred embodiment, the trace data are calibrated so that a signal level of the traces is 0 dB if there is no link loss at all (e.g. just at the near end of the transmission line). Then the link loss is the absolute value of the logarithmically-scaled signal level. Using calibrated traces therefore simplifies the calculations performed by the method.

In an embodiment, the trace data is generated form measurement data obtained by means of an embedded optical time reflectometer (OTDR) included in an optical transceiver module of a network element of an optical network. The method can be implemented particularly cost-efficiently when using an embedded ODTR. In addition, in contrast to conventional ODTRs, the embedded OTDR uses a test signal having the same wavelength as the downstream data signal and propagating exactly along the same path as the downstream data signal. As a consequence, using the embedded ODTR allows for measuring the link loss more accurately than using a conventional OTDR.

In an embodiment, the optical time domain reflectometry is performed on a first wavelength band and the method comprises estimating the link loss related to a second wavelength band that differs from the first wavelength band by applying further correction value to the estimated link loss related to the first wavelength band. Preferably, the first wavelength band includes the wavelength of the downstream data signal and the second wavelength band includes the wavelength of the upstream data signal so that the link loss can be determined for both the downstream as well as the upstream transmission direction.

Preferably, the further correction value may be calculated from the attenuation per length unit in the first wavelength band, the attenuation per length unit in the second wavelength band and/or a distance between the two ends of the transmission line.

According to another preferred embodiment of the present invention, a device for measuring a link loss of a section of an optical transmission line is provided, the device being operable for retrieving trace data (TD1, TD2) describing an optical time domain reflectometry trace; and estimating the link loss from the trace data (TD1, TD2).

In an embodiment, the device is operable for executing a method according to the invention, embodiments of which are herein described.

According to yet another embodiment, a monitoring station for an access network is provided, the access network comprising at least one optical transmission line, the monitoring station comprising the device for measuring a link loss of a section of an optical transmission line.

According to still another embodiment, a computer program product, preferably a computer readable storage medium is provided, the computer program product comprising a computer program that is programmed for executing a method according to the invention, embodiments of which are herein described. The storage medium may include magnetic (e.g. disk or tape), optical (e.g. disk) or semiconductor storage (e.g. ROM or Flash-Memory). Moreover, the computer program product may be provided for download over a communication network such as the Internet.

**Brief description of the figures**

Exemplary embodiments and further advantages of the present invention are shown in the Figures and described in detail hereinafter.

| Figure 1 | shows a communication network according to an embodiment of the invention; |
| Figure 2 | shows a block diagram of a transceiver module of a network element of the communication network shown in Figure 1; |
| Figure 3 | shows a flowchart of a method for measuring a link loss of an optical transmission line of the network shown in Figure 1; and |
| Figure 4 and 5 | show diagrams of different optical time domain reflectometry traces. |

**Description of the embodiments**

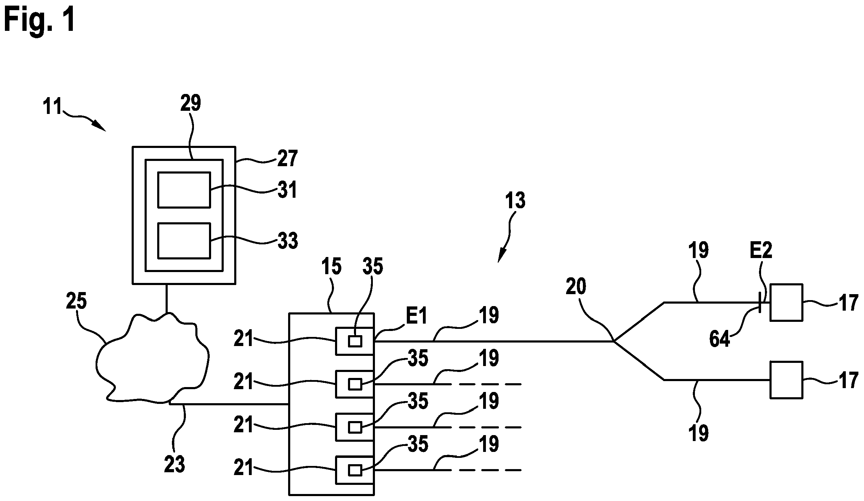

Figure 1 shows a network 11 according to a preferred embodiment. The network 11 comprises an optical access network such as a Passive Optical Network (PON 13). The PON 13 has at least one Optical Line Termination (OLT 15) node and multiple Optical Network Units (ONUs 17). The OLT 15 and the ONUs 17 are interconnected by each other by optical waveguides, in particular optical fibers 19. As shown in Figure 1, at least one fiber 19 may end at an optical splitter 20 to which further fibers 19 are connected, resulting in the fibers 19 of the PON 13 forming a tree-like structure 19, 20 interconnecting a single transceiver module 21 of the OLT 15 with multiple ONUs 17. The PON 13 provides an optical transmission line between a transceiver module 21 of the OLT 15 and the individual ONUs 17. For example, one optical transmission line extends from a first end E1 corresponding to a fiber end connected to a transceiver module 21 over the optical splitter 20 to a second end E2 corresponding to a fiber end connected to one of the ONUs 17. However, a fiber 19 providing the optical transmission line by means of a simple point-to-point connection between a transceiver module 21 and a single ONU 17 can also be implemented. In an embodiment, at least one transceiver module 21 is a Small form Factor Pluggable (SFP) that is installed in the OLT 15.

The OLT 15 may be located in a central office and the ONU 17 may be located close to customers of an operator of the network 11. Depending on the overall organization of the network 11, at least one ONU 17 may be installed directly at the customer's premises (fiber to the home, FTTH). However, the fiber 19 may also be terminated in a building where the customer is located (fiber to the building, FTTB) or in a cabinet near to the building where the customer is located (fiber to the cabinet, FTTC). Accordingly, at least one of the ONUs 17 of the PON 13 may be located in the building or the cabinet, respectively. The OLT 15 is connected via a backhaul link 23 to a core network 25 of the network 11, which may be in turn connected to a wide area network such as the Internet (not shown).

Moreover, the network 11 comprises at least one monitoring station 27. The monitoring station 27 can communicate with the at least one OLT 15. For example, the monitoring station 27 may be connected to the core network 25. In an embodiment, the monitoring station 27 is co-located with the OLT 15 in the central office. However, in the embodiment shown in Figure 1, the monitoring station 27 is located at a different place than the OLT 15.

As shown in Figure 1, the monitoring station 27 comprises a computer 29 including a processor 31 and a storage element 33. The storage element 33 may comprise magnetic memory (e.g. magnetic disk or tape), optical memory (e.g. optical disk) and/or semiconductor memory (RAM, ROM, Flash Memory, etc.). In an embodiment, the computer 29 is designed according to the Personal Computer (PC) architecture. Preferably, the computer 29 may be a PC-based server or the like. On the storage element 33, a computer program may be stored that is programmed for executing a method described herein when run on the computer 29.

At least one transceiver module 21 includes an optical time domain reflectometer (ODTR 35) arranged to capture a response signal received from the fiber 19 and caused by a test signal fed by the transceiver module into the fiber 19.

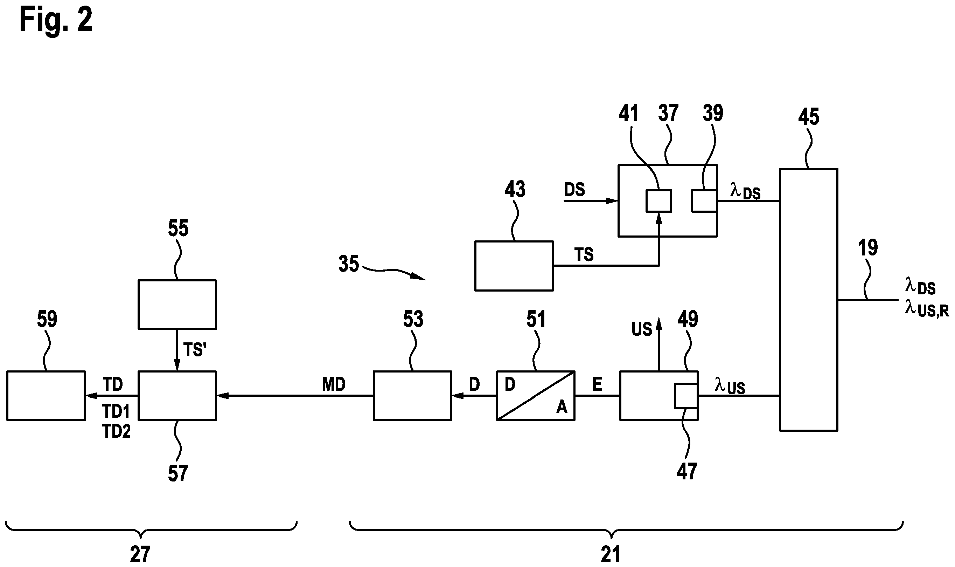

Figure 2 shows a block diagram of the transceiver module 21 including the reflectometer 35 and of signal processing operations that may performed outside of the transceiver module 21, e.g. within the monitoring station 27.

The transceiver module 21 comprises a transmitter 37 arranged for receiving a downstream data signal DS from other parts of the OLT 19. The transmitter 37 has a light source 39 such as a laser adapted to emit a downstream optical signal $\lambda_{DS}$ that includes downstream data contained in the downstream data signal DS. The transmitter 37 comprises a modulator 41, an input of which is connected to an output of a test signal generator 43 of the transceiver module 21. The modulator 41 is operable for modulating the downstream optical signal $\lambda_{DS}$ with a test signal TS generated by the test signal generator. As a consequence, the downstream optical signal $\lambda_{DS}$ emitted by the light source 39 includes not only the downstream data but also the test signal TS.

In the shown embodiment, the test signal includes a test sequence comprising one or more pulses. More specifically, the test sequence is a Pseudo Random Binary Sequence (PRBS). However, in other embodiments, different types of test sequences may also be used. Preferably, pulses of the test signal have a defined and known pulse width W.

An optical splitter/combiner 45 of the transceiver module 21 connected to the light source 39 forwards the downstream optical signal $\lambda_{DS}$ including the downstream data and the test signal to the fiber 19 connected to the transceiver module 21. Moreover, an optical upstream signal $\lambda_{US}$ transmitted by an ONU 17 and backscatter from the optical downstream signal $\lambda_{DS}$ generated by a transceiver module 21 reaches the splitter/combiner 45 of the same transceiver module 21. The backscatter includes the test signal TS and can therefore be considered to include a response signal R caused by the test signal TS coupled into the optical downstream signal $\lambda_{DS}$ by means of the modulator 41 of the same transceiver module 21. The response signal R is processed in order to perform optical time domain reflectometry.

The splitter/combiner 45 is also connected to a light sensor 47 of a receiver 49 of the transceiver module 21. The light sensor 47 may include e.g. a photodiode or any other semiconductor element suitable for detecting light. The splitter/combiner 45 is adapted to receive an upstream optical signal $\lambda_{US}$ and the backscatter including the response signal R from the fiber 19 connected to the transceiver module 47 and to forward the optical upstream signal $\lambda_{US}$ and the backscatter including the response signal R to the light sensor 47. The light sensor 47 is arranged for converting the optical upstream signal $\lambda_{US}$ and the backscatter including the response signal R into a corresponding electrical signal E and to generate an upstream data signal US from the electrical signal E. The upstream data signal US comprises upstream data contained in the optical upstream signal $\lambda_{US}$.

The receiver 49 is coupled with an analog-to-digital converter 51 so that the analog-to-digital converter 51 can convert the electrical signal E into a corresponding digital signal D. The transceiver module 21 may comprise an optional preprocessing stage 53 arranged for preprocessing the digital signal D. Preprocessing may include e.g. filtering and/or averaging the digital signal. The transceiver module has an output for outputting a signal including measurement data MD. The signal including the measurement data is generated by the preprocessing stage 53 from the digital signal D.

Parts of the OLT 15 other than the transceiver module 21 may be operable for receiving the measurement data MD from the transceiver module 21 built-in or plugged-into the OLT 15 and for forwarding them to another node of the network 11 for further processing. For receiving the measurement data MD from the transceiver module 21, a communication link - like a narrowband serial or parallel interface (e.g. an $I^2C$ bus link or the like) - that may also be used for additional management and control tasks, may be arranged between the transceiver module 21 and the remaining parts of the OLT 15. In the shown embodiment, said further processing of the measurement data MD is carried out on the monitoring station 27. The computer 29 of the monitoring station 27 may be programmed accordingly. In another embodiment, the further processing of the measurement data is performed on a different node of the network than the monitoring station. It is even possible to process the measurement data MD locally on the OLT in which the transceiver module 21 that generates the measurement data MD is installed.

Signal processing blocks that may be present on the monitoring station 27 are depicted on the left hand side of Figure 2. The blocks include e.g. a further test signal generator 55 and a correlator 57 connected to an output of the further test signal generator 57. The further test signal generator 57 is adapted to generate at further test signal TS' that is at least essentially the same test signal as the test signal TS generated by the test signal generator 41. The further test signal TS' should include the same test sequence as the test signal TS, e.g. the two test signal generator should generate test signals TS, TS' include the same PRBS.

The correlator 57 is operable to receive the measurement signal or at least the measurement data MD included therein and to correlate the measurement data MD with the test signal TS'. A result of this correlation includes trace data TD describing an optical time domain reflectometry trace. An analyzing block 59 analyzes the trace data TD in order to diagnose impairments of the fiber 19 and to estimate transmission characteristics of the fiber 19. In particular, the analyzing block is adapted to measure a link loss of an optical transmission line of the network 11 in downstream or upstream direction.

The above-described reflectometry approach is also referred to embedded ODTR because at least the analog parts of the reflectometer are embedded into the transceiver module. It should further be noted that some parts of the transceiver module 21 are used for both data transmission as well as for processing and/or transmission of the test signal TS or the response signal R. Because very few components exclusively dedicated to ODTR are needed, an embedded reflectometer can be implemented cost efficiently and, due to the integration in the receiver module 21, does not need additional space.

However, the present invention can also be carried out in combination with a conventional dedicated reflectometer rather than the embedded one. Moreover, the embedded reflectometry approach shown in Figure 2 may include additional processing block, e.g. additional filters, which are not shown in Figure 2 for the sake of simplicity.

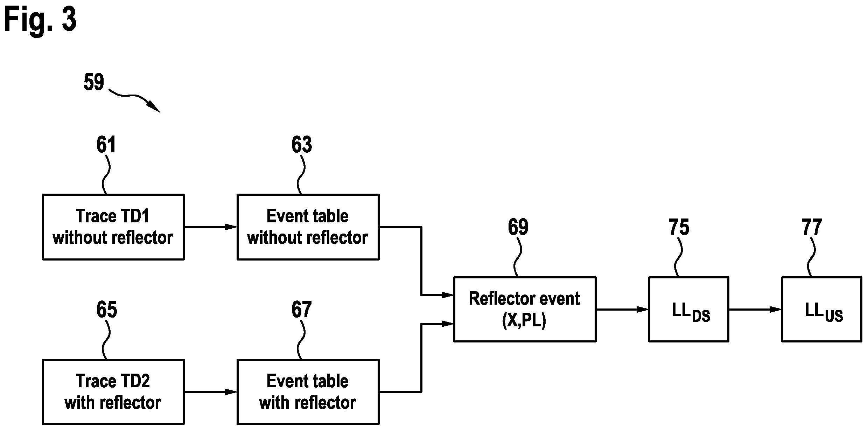

Figure 3 shows a detail of the analyzing block 59. In particular, operations are shown that allow to measure a link loss $LL_{Ds}$ of the downstream optical signal $\lambda_{DS}$ within a section of an optical transmission line provided by the fibers 19 of the PON 13. These operations are based on analyzing the response signal R included in the backscatter caused by the downstream optical signal $\lambda_{DS}$. The method executed e.g. on the monitoring station 27 or a different node of the network may include at least the operations of the analyzing block 59. However, other processing steps - such as operations performed by blocks 55, 57 and 59 may also be a part of this method.

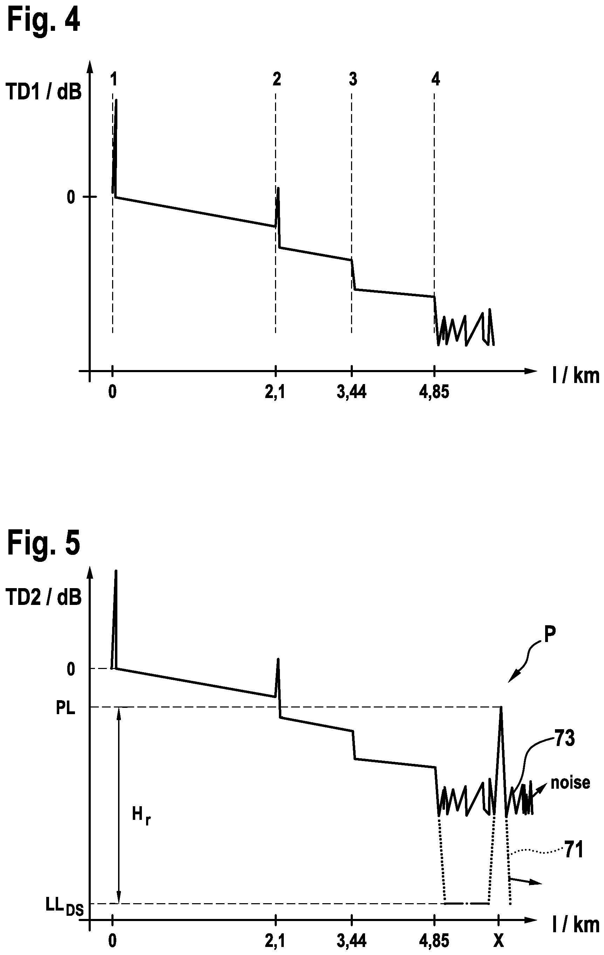

In a step 61, first trace data TD1 are retrieved that have been generated based on measurement data MD gathered when the transmission line under test was unmodified. The first trace data TD thus constitute a first set of trace data based on the optical time domain reflectometry performed by means of the optical time domain reflectometer 35 connected to the first end E1 of the transmission line 13 without a reflector being inserted at a second end E2 of the transmission line. A diagram of this first trace data TD1 is shown in Figure 4. The x-axis of this diagram shows the distance 1 between a first end of the section of the fiber, which first end is connected to the reflectometer 35, and a point within the fiber 19. The y-axis shows a signal level of the response signal R. The signal level is normalized to the signal level of the response signal R at the first end E1, i.e. the level of the response signal R is 0 dB at the first end E1 of the fiber 19 (calibrated trace data).

In general, in case of no impairments in the fiber 19, the signal level of the response signal R decreases continuously due to the increase of the attenuation of the fiber 19 over the length 1. In case of an impairment, however, the course of the signal level may have a peak (i.e. a local maximum) or a step-like sudden decrease of the signal level. A peak is the result of reflections at a certain position within the fiber 19. The sudden decrease is caused by different types of impairments that result in an increased attenuation at a certain point within the fiber 19 (e.g. the fiber might have been bent with a too little radius, etc.). Both the peaks as well as the step-like sudden decreases are also referred to as "events" related to a certain point within the fiber 19.

A step 63 of block 59 analyzes the first trace data TD1. The analysis performed in step 63 includes detecting the peaks and sudden decreases (events) and determining characteristics of the peaks or sudden decreases like a height of the peaks or the depth of the sudden decreases. Moreover, a peak level of the individual peaks may be determined. In an embodiment, the result of this analysis may be represented by and/or stored as an event table. When numbering the events according to their position (and therefore according to their instant of occurrence within the trace represented over the time), the following event table is obtained when analyzing the trace shown in Figure 4.

| Event | Position (km) | Loss (dB) | Reflection factor (dB) |
|-------|---------------|-----------|------------------------|
| 1 | 0.00 | - | -30 |
| 2 | 2.10 | 1.2 | -45 |
| 3 | 3.44 | 1.8 | - |
| 4 | 4.85 | 2.0 | - |

Moreover, block 59 comprises a step 65 for retrieving second trace data TD2 and a step 67 for analyzing the second trace data TD2. Preferably, the steps 65 and 67 correspond to steps 61 and 63, i.e. perform the same operations as steps 61 and 63; however based on a different set of trace data TD1, TD2.

The second trace data TD2 are generated based on measurement data MD captured when a reflector 64 has been installed at the second end E2 of the transmission line under test. The second trace data TD2 constitute a second set of trace data based on the optical time domain reflectometry performed by means of the optical time domain reflectometer 35 connected to the first end E1 of the transmission line 13 while the reflector 64 is inserted at the second end E2 of the transmission line 13. The second end E2 may be selected by a user of the monitoring station 27 when testing the transmission line. As shown in Figure 1, the first end E1 corresponds to the point within the fiber where the reflectometer 35 is installed. In the shown embodiment using an embedded OTDR 35, the first end E1 is the end of the fiber connected to one of the transceiver modules 21. In an example shown in Figure 1, the end of the fiber 19 connected to one of the ONUs 17 is selected as the second end E2. Consequently the transmission line under test extends from the transceiver module 21 to the most upper ONU 17 shown in Figure 1.

Any type of reflector can be used as the reflector 64 applied in connection with the method described herein. Preferably, the reflector 64 has a stable reflectivity factor in order to achieve accurate measurement results. The reflector 64 may be e.g. an open UPC connector (known for high and stable reflection if the connector interface is not contaminated), a Fiber Bragg grating or a Fabry-Perot cavity, which are commercially available with different reflectivity levels.

The second trace data TD2 are related to reflectometry measurements performed with the reflector 64 installed at the second end E2, while the first trace data TD 1 relate to reflectometry measurement performed without having the reflector 64 installed at the second end E2.

Analyzing the so obtained second trace data TD2 in step 67 will show that in the trace corresponding to the second trace data TD2 (shown in Figure 5) contains an additional peak P at a location X, which peak is not present is the trace corresponding to the first trace data TD1. In an embodiment using event tables, step 67 thus generates an event table that has an additional row for the additional peak P:

| Event | Position (km) | Loss (dB) | Reflection factor (dB) |
|-------|---------------|-----------|------------------------|
| 1 | 0.00 | - | -30 |
| 2 | 2.10 | 1.2 | -45 |
| 3 | 3.44 | 1.8 | - |
| 4 | 4.85 | 2.0 | - |
| 5 | X | L | R |

In the shown embodiment, the trace data TD1, TD2 refer to calibrated traces, where a signal level of 0 dB of the traces shown in Figures 4 and 5 corresponds to 0 dB link loss. Thus, the absolute value of the signal level at the start of the peak of TD2 not present in TD 1 corresponds to the link loss $LL_{Ds}$ of the section of the fiber 19 between the two ends E1 and E2. The corresponding signal level of the trace is $-LL_{Ds} < 0$. Basically, the additional peak P introduces by the reflector serves as a marker to find the position of the selected second end E2 in the fiber 19 within the trace.

In order to find the additional peak P present in the second trace data TD2 but not in the first trace data TD1, a step 69 of block 59 compares the two trace data TD1, TD2 with each other. A result of this comparison comprises the location X of the additional peak P within the trace and the peak level PL of the additional peak P. In some cases; if the signal level of the response signal R at location X is high enough; the signal level $LL_{Ds}$ of the response signal R (i.e. the signal level of the respective trace) at the start of the additional peak P can be derived directly in step 69. In these cases the trace according to the second trace data TD2 corresponds to a curve 71, which is drawn with dotted lines in Figure 5. In an embodiment, the start of the peak may be identified based on the derivative of the trace. For example, the start of the peak can be identified as the point where the derivative of the trace exceeds a threshold. The threshold may be equal to several times an average of the deviation of the trace (e.g. a value from 4 times up to 8 times, preferably 6 times the average deviation). For calculating the average, the whole trace or sections of the trace between the peaks may be considered.

However, in many cases the signal level $-LL_{DS}$ of the response signal R at location X is so low that the response signal R is dominated by noise generated e.g. by the OTDR 35. In other words, the dynamic range of the OTDR 35 is not sufficient to measure the signal level $-LL_{DS}$ directly. The dynamic range of an embedded OTDR is typically about 10 dB. Acceptable link losses may reach up to 28 dB (for class B+ PON systems) or even 32 dB (for C+ PON systems). The trace affected by noise due to the limited dynamic range of the ODTR 35 corresponds to a further curve 73 shown drawn with solid lines in Figure 5.

Consequently, block 59 has a step 75 for calculation the signal level $-LL_{DS}$ at the start of the additional peak P from the peak level PL. This calculation is based on the fact that the difference (when using the logarithmic scale of Figures 4 and 5) between the peak level PL and the signal level $LL_{DS}$ at the start of the peak is known and fixed since the reflection behavior of the reflector 64 is fixed. Thus, step 75 may calculate the signal level $-LL_{DS}$ at the start of the additional peak P, the absolute value of which signal level corresponds to the link loss $LL_{DS}$ between the two ends E1, E2, as follows.

$$LL_{DS} = |PL - H|, \qquad\qquad (1)$$

where H is a reflection peak height related to the reflector 64 installed at the second end E2.

The reflection peak height H depends on a constant reflection factor R of the reflector 64, a backscatter efficiency value $B_{ns}$ depending on the type of the fiber 19, an attenuation $\alpha$ of the fiber 19 per length unit and a pulse width W (expressed in km) of pulses of the test sequence. The reflection peak height H can be derived from the following equation, which is well-known from ODTR theory:

$$R = B_{ns} + 10 \log\left[\left(10^{\frac{H}{5}} - 1\right) \cdot 10000 \frac{\exp(2\alpha W) - 1}{2\alpha}\right] \qquad\qquad (2)$$

The above value $LL_{DS}$ refers to a downstream link loss because the test signal TS is modulated on the downstream optical signal $\lambda_{DS}$ and the response signal R is backscatter from the downstream optical signal $\lambda_{DS}$.

In a preferred embodiment, the block 77 comprises an optional step 77 for calculating an upstream link loss $LL_{US}$ from the downstream link loss $LL_{DS}$ by compensating the frequency dependency of transmission characteristics of the fiber 19. This compensation is possible when the attenuation per length unit $\alpha_{\lambda_{US}}$ in an upstream wavelength $\lambda_{US}$ and the attenuation per length unit $\alpha_{\lambda_{DS}}$ in a downstream wavelength $\lambda_{DS}$ are known or can be estimated. Step 77 may calculate the upstream link loss $LL_{US}$ between the two ends E1 and E2 as follows:

$$LL_{US} = LL_{DS} + \left(\alpha_{\lambda_{US}} - \alpha_{\lambda_{DS}}\right)X \tag{3}$$

The value X is the location of the additional peak detected in step 69 (i.e. the distance between the two ends E1, E2). X corresponds to the length of the transmission line (E1, E2) under test.

To sum up, the method and device described herein allow to measure the link loss $LL_{DS}$, $LL_{US}$ of the optical transmission line between a first fiber end E 1 of the PON 13 and a second fiber end E2 of the PON 13. The first end E1 corresponds to the end of the fiber 19 connected to the reflectometer 35 and the second E2 can be arbitrarily selected by inserting the reflector 64 at the desired point within the PON 13. The reflector 64 causes an additional peak in the trace (visible in the second trace data TD2), which serves as a marker of the position X of the second end E2 within the respective trace. The absolute value of the signal level -$LL_{DS}$ of the response signal R at the start of the additional peak P corresponds to the downstream link loss $LL_{DS}$. The signal level -$LL_{DS}$ of the response signal at the start of the additional peak P is preferably calculated from the peak level PL of the additional peak P because of the limited dynamic range of the reflectometer 35. Moreover, the upstream link loss $LL_{US}$ may be derived from the downstream link loss $LL_{DS}$, the position X of the additional peak P and transmission characteristics of the used fiber 19. The method and device described herein allow measuring the link loss $LL_{DS}$, $LL_{US}$ easily with high accuracy compared to known approaches.

**Claims**

1.  Method for measuring a link loss ($LL_{DS}$, $LL_{US}$) of an optical transmission line (13), the method comprising

    - retrieving trace data (TD1, TD2) describing an optical time domain reflectometry trace; and
    - estimating the link loss from the trace data (TD1, TD2);
    **characterized in that** the method comprises
    - retrieving a first set (TD1) of the trace data, said first set (TD1) being based on the optical time domain reflectometry performed by means of an optical time domain reflectometer (35) connected to a first end (E1) of the transmission line (13) without a reflector (64) being inserted at a second end (E2) of the transmission line; and
    - retrieving a second set (TD2) of the trace data, the second set (TD2) being based on the optical time domain reflectometry performed by means of the optical time domain reflectometer (35) connected to the first end (E1) of the transmission line (13) while the reflector (64) is inserted at the second end (E2) of the transmission line (13);

    wherein the estimating the link loss ($LL_{DS}$, $LL_{US}$) comprises comparing (69) the first set of trace data (TD1) with the second set of trace data (TD2).

2.  Method according to claim 1, wherein comparing the two sets (TD1, TD2) of trace data comprises searching for a peak (P) in an optical time domain reflectometry trace described by the first set (TD1) that is not present in the optical time domain reflectometry trace described by the second set (TD2).

3.  Method according to claim 2, wherein determining the signal level comprises determining a peak level (PL) of the peak (P) and calculating the link loss ($LL_{DS}$, $LL_{US}$) from the peak level (PL) and a correction value (H).

4.  Method according to claim 3, wherein the correction value is calculated from a reflection factor of the reflector, a backscatter efficiency of the transmission line (13), an attenuation per length unit of the transmission line (13) and/or a pulse width of a pulse of a test signal fed into the transmission line (13) by the reflectometer (35).

5.  Method according to claim 2, wherein the method comprises determining a signal level (-$LL_{DS}$) of the trace described by the second set of trace data (TD2) at a start of the peak (P) and estimating the link loss ($LL_{DS}$, $LL_{US}$) from this signal level (-$LL_{DS}$).

6.  Method according to one of the precedent claims, wherein the trace data (TD1, TD2) is generated from measurement data obtained by means of an embedded optical time reflectometer (34) included in an optical transceiver module (21) of a network element (15) of an optical network (11).

7. Method according to one of the precedent claims, wherein the optical time domain reflectometry is performed on a first wavelength band ($\lambda_{DS}$) and wherein the method comprises estimating the link loss ($LL_{US}$) related to a second wavelength band ($\lambda_{US}$) that differs from the first wavelength band ($\lambda_{DS}$) by applying further correction value to the estimated link loss ($LL_{DS}$) related to the first wavelength band ($\lambda_{DS}$).

8. Method according to claim 7, wherein the further correction value is calculated from the attenuation per length unit in the first wavelength band ($\lambda_{DS}$), the attenuation per length unit in the second wavelength band($\lambda_{US}$) and/or a distance (X) between the two ends (E1, E2) of the transmission line (13).

9. System comprising a reflector (64) and a device (29) for measuring a link loss ($LL_{DS}$, $LL_{US}$) of an optical transmission line (13), the device (29) being operable for

- retrieving trace data (TD1, TD2) describing an optical time domain reflectometry trace; and
- estimating the link loss from the trace data (TD1, TD2);
**characterized in that** the device (29) is operable for
- retrieving a first set (TD1) of the trace data, said first set (TD1) being based on the optical time domain reflectometry performed by means of an optical time domain reflectometer (35) connected to a first end (E1) of the transmission line (13) without the reflector (64) being inserted at a second end (E2) of the transmission line; and
- retrieving a second set (TD2) of the trace data, the second set (TD2) being based on the optical time domain reflectometry performed by means of the optical time domain reflectometer (35) connected to the first end (E1) of the transmission line (13) while the reflector (64) is inserted at the second end (E2) of the transmission line (13);

wherein the estimating the link loss ($LL_{DS}$, $LL_{US}$) comprises comparing (69) the first set of trace data (TD1) with the second set of trace data (TD2).

## Patentansprüche

1. Verfahren für die Messung eines Verbindungsverlusts ($LL_{DS}$, $LL_{US}$) einer optischen Übertragungsleitung (13), wobei das Verfahren umfasst

- Empfangen von Ermittlungsdaten (TD1, TD2), die eine optische Zeitbereichsreflektometrie-Ermittlung beschreiben; und
- Schätzen des Verbindungsverlusts aus den Ermittlungsdaten (TD1, TD2);
**dadurch gekennzeichnet, dass** das Verfahren umfasst
- Empfangen eines ersten Satzes (TD1) von Ermittlungsdaten, wobei besagter erster Satz (TD1) basiert auf der optischen Zeitbereichsreflektometrie, die durchgeführt wurde mittels eines optischen Zeitbereichsreflektometers (35), der an ein erstes Ende (E1) der Übertragungsleitung (13) angeschlossen ist, ohne dass ein Reflektor (64) an einem zweiten Ende (E2) der Übertragungsleitung eingefügt ist; und
- Empfangen eines zweiten Satzes (TD2) der Ermittlungsdaten, wobei besagter zweiter Satz (TD2) basiert auf der optischen Zeitbereichsreflektometrie, die durchgeführt wurde mittels des optischen Zeitbereichsreflektometers (35), der an ein erstes Ende (E1) der Übertragungsleitung (13) angeschlossen ist, während der Reflektor (64) am zweiten Ende (E2) der Übertragungsleitung (13) eingefügt ist;

wobei das Schätzen des Verbindungsverlusts ($LL_{DS}$, $LL_{US}$) umfasst, das Vergleichen (69) des ersten Satzes von Ermittlungsdaten (TD1) mit dem zweiten Satz von Ermittlungsdaten (TD2).

2. Verfahren nach Anspruch 1, wobei das Vergleichen der zwei Sätze (TD1, TD2) der Ermittlungsdaten umfasst, das Suchen nach einer Spitze (P) in einer optischen Zeitbereichsreflektometrie-Ermittlung, beschrieben von dem ersten Satz (TD1), die nicht vorhanden ist in der optischen Zeitbereichsreflektometrie-Ermittlung, die vom zweiten Satz (TD2) beschrieben wird.

3. Verfahren nach Anspruch 2, wobei das Bestimmen des Signalpegels umfasst, das Bestimmen eines Spitzenpegels (PL) der Spitze (P) und das Berechnen des Verbindungsverlusts ($LL_{DS}$, $LL_{US}$) aus dem Spitzenpegel (PL) und einem Korrekturwert (H).

4. Verfahren nach Anspruch 3, wobei der Korrekturwert berechnet wird aus einem Reflexionsfaktor des Reflektors, einer Rückstreuungseffizienz der Übertragungsleitung (13), einer Dämpfung pro Längeneinheit der Übertragungsleitung (13) und/oder einer Pulsweite eines Pulses des Testsignals, das in die Übertragungsleitung (13) mittels des Reflektometers (35) eingespeist wird.

5. Verfahren nach Anspruch 2, wobei das Verfahren umfasst, das Bestimmen eines Signalpegels (-LL$_{DS}$) der Ermittlung, beschrieben mittels des zweiten Satzes der Ermittlungsdaten (TD2) am Beginn der Spitze (P), und das Schätzen des Verbindungsverlusts (LL$_{DS}$, LL$_{US}$) aus diesem Signalpegel (-LL$_{DS}$).

6. Verfahren nach einem der vorhergehenden Ansprüche, wobei die Ermittlungsdaten (TD1, TD2) erzeugt werden aus Messdaten, die mittels eines eingebetteten optischen Zeitreflektometers (34) erhalten werden, das in einem optischen Transceiver-Modul (21) eines Netzwerkelements (15) eines optischen Netzwerks (11) enthalten ist.

7. Verfahren nach einem der vorhergehenden Ansprüche, wobei die optische Zeitbereichsreflektometrie durchgeführt wird an einem ersten Wellenlängenband ($\lambda_{DS}$) und wobei das Verfahren umfasst, das Schätzen des Verbindungsverlusts (LL$_{US}$), der mit einem zweiten Wellenlängenband ($\lambda_{US}$) verbunden ist, das sich von dem ersten Wellenlängenband ($\lambda_{DS}$) unterscheidet, durch Anwenden eines weiteren Korrekturwerts auf den geschätzten Verbindungsverlust (LL$_{DS}$), der mit dem ersten Wellenlängenband ($\lambda_{DS}$) verbunden ist.

8. Verfahren nach Anspruch 7, wobei der weitere Korrekturwert berechnet wird aus der Dämpfung pro Längeneinheit im ersten Wellenlängenband ($\lambda_{DS}$), aus der Dämpfung pro Längeneinheit im zweiten Wellenlängenband ($\lambda_{US}$) und/oder aus einem Abstand (X) zwischen den beiden Enden (E1, E2) der Übertragungsleitung (13).

9. System, umfassend einen Reflektor (64) und ein Gerät (29) für die Messung eines Verbindungsverlusts (LL$_{DS}$, LL$_{US}$) einer optischen Übertragungsleitung (13), wobei das Gerät (29) betriebsfähig ist für das

   - Empfangen von Ermittlungsdaten (TD1, TD2), die eine optische Zeitbereichsreflektometrie-Ermittlung beschreiben; und
   - Schätzen des Verbindungsverlusts aus den Ermittlungsdaten (TD1, TD2);
   **dadurch gekennzeichnet, dass** das Gerät (29) betriebsfähig ist für das
   - Empfangen eines ersten Satzes (TD1) von Ermittlungsdaten, wobei besagter erster Satz (TD1) basiert auf der optischen Zeitbereichsreflektometrie, die durchgeführt wurde mittels eines optischen Zeitbereichsreflektometers (35), das an ein erstes Ende (E1) der Übertragungsleitung (13) angeschlossen ist, ohne dass ein Reflektor (64) an einem zweiten Ende (E2) der Übertragungsleitung eingefügt ist; und
   - Empfangen eines zweiten Satzes (TD2) der Ermittlungsdaten, wobei besagter zweiter Satz (TD2) basiert auf der optischen Zeitbereichsreflektometrie, die durchgeführt wurde mittels des optischen Zeitbereichsreflektometers (35), das an ein erstes Ende (E1) der Übertragungsleitung (13) angeschlossen ist, während der Reflektor (64) am zweiten Ende (E2) der Übertragungsleitung (13) eingefügt ist;

   wobei die Schätzung des Verbindungsverlusts (LL$_{DS}$, LL$_{US}$) umfasst, das Vergleichen (69) des ersten Satzes von Ermittlungsdaten (TD1) mit dem zweiten Satz von Ermittlungsdaten (TD2).

## Revendications

1. Procédé de mesure d'une perte de liaison (LL$_{DS}$, LL$_{US}$) d'une ligne de transmission optique (13), le procédé comprenant les étapes suivantes :

   - récupérer des données de trace (TD1, TD2) décrivant une trace de réflectométrie de domaine optique temporel ; et
   - estimer la perte de liaison à partir des données de trace (TD1, TD2) ;

   **caractérisé en ce que** le procédé comprend les étapes suivantes :

   - récupérer un premier ensemble (TD1) des données de trace, ledit premier ensemble (TD1) étant basé sur la réflectométrie de domaine optique temporel réalisée au moyen d'un réflectomètre de domaine optique temporel (35) connecté à une première extrémité (E1) de la ligne de transmission (13) sans insertion d'un réflecteur (64) au niveau d'une deuxième extrémité (E2) de la ligne de transmission ; et
   - récupérer un deuxième ensemble (TD2) des données de trace, le deuxième ensemble (TD2) étant basé sur la réflectométrie de domaine optique temporel réalisée au moyen du réflectomètre de domaine optique temporel (35) connecté à la première extrémité (E1) de la ligne de transmission (13) avec le réflecteur (64) inséré au niveau de la deuxième extrémité (E2) de la ligne de transmission (13) ;

dans lequel l'estimation de la perte de liaison ($LL_{DS}$, $LL_{US}$) comprend la comparaison (69) du premier ensemble de données de trace (TD1) avec le deuxième ensemble de données de trace (TD2).

2. Procédé selon la revendication 1, dans lequel la comparaison des deux ensembles (TD1, TD2) de données de trace comprend la recherche d'un pic (P) dans une trace de réflectométrie de domaine optique temporel décrite par le premier ensemble (TD1) qui n'est pas présent dans la trace de réflectométrie de domaine optique temporel décrite par le deuxième ensemble (TD2).

3. Procédé selon la revendication 2, dans lequel la détermination du niveau de signal comprend la détermination d'un niveau de crête (PL) du pic (P) et le calcul de la perte de liaison ($LL_{DS}$, $LL_{US}$) à partir du niveau de crête (PL) et d'une valeur corrective (H).

4. Procédé selon la revendication 3, dans lequel la valeur corrective est calculée à partir d'un facteur de réflexion du réflecteur, d'une efficacité de rétrodiffusion de la ligne de transmission (13), d'une atténuation par unité de longueur de la ligne de transmission (13) et/ou d'une largeur d'impulsion d'une impulsion d'un signal de test injecté dans la ligne de transmission (13) par le réflectomètre (35).

5. Procédé selon la revendication 2, dans lequel le procédé comprend la détermination d'un niveau de signal ($-LL_{DS}$) de la trace décrite par le deuxième ensemble de données de trace (TD2) au début du pic (P) et l'estimation de la perte de liaison ($LL_{DS}$, $LL_{US}$) à partir de ce niveau de signal ($-LL_{DS}$).

6. Procédé selon l'une des revendications précédentes, dans lequel les données de trace (TD1, TD2) sont générées à partir de données de mesure obtenues au moyen d'un réflectomètre optique temporel intégré (34) inclut dans un module émetteur-récepteur optique (21) d'un élément de réseau (15) d'un réseau optique (11).

7. Procédé selon l'une des revendications précédentes, dans lequel la réflectométrie de domaine optique temporel est réalisée sur une première bande de longueurs d'onde ($\lambda_{DS}$) et dans lequel le procédé comprend l'estimation de la perte de liaison ($LL_{US}$) liée à une deuxième bande de longueurs d'onde ($\lambda_{US}$) qui diffère de la première bande de longueurs d'onde ($\lambda_{DS}$) en appliquant une autre valeur corrective à la perte de liaison estimée ($LL_{DS}$) liée à la première bande de longueurs d'onde ($\lambda_{DS}$).

8. Procédé selon la revendication 7, dans lequel l'autre valeur corrective est calculée à partir de l'atténuation par unité de longueur dans la première bande de longueurs d'onde ($\lambda_{DS}$), de l'atténuation par unité de longueur dans la deuxième bande de longueurs d'onde ($\lambda_{US}$) et/ou d'une distance (X) entre les deux extrémités (E1, E2) de la ligne de transmission (13).

9. Système comprenant un réflecteur (64) et un dispositif (29) de mesure d'une perte de liaison ($LL_{DS}$, $LL_{US}$) d'une ligne de transmission optique (13), le dispositif (29) permettant de

- récupérer des données de trace (TD1, TD2) décrivant une trace de réflectométrie de domaine optique temporel ; et
- estimer la perte de liaison à partir des données de trace (TD1, TD2) ;
**caractérisé en ce que** le dispositif (29) permet de
- récupérer un premier ensemble (TD1) des données de trace, ledit premier ensemble (TD1) étant basé sur la réflectométrie de domaine optique temporel réalisée au moyen d'un réflectomètre de domaine optique temporel (35) connecté à une première extrémité (E1) de la ligne de transmission (13) sans insertion du réflecteur (64) au niveau d'une deuxième extrémité (E2) de la ligne de transmission ; et
- récupérer un deuxième ensemble (TD2) des données de trace, le deuxième ensemble (TD2) étant basé sur la réflectométrie de domaine optique temporel réalisée au moyen du réflectomètre de domaine optique temporel (35) connecté à la première extrémité (E1) de la ligne de transmission (13) avec le réflecteur (64) inséré au niveau de la deuxième extrémité (E2) de la ligne de transmission (13) ;

dans lequel l'estimation de la perte de liaison ($LL_{DS}$, $LL_{US}$) comprend la comparaison (69) du premier ensemble de données de trace (TD1) avec le deuxième ensemble de données de trace (TD2).

Fig. 1

EP 2 846 480 B1

# Fig. 2

EP 2 846 480 B1

EP 2 846 480 B1

## Fig. 3

## Fig. 4

## Fig. 5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010076567 A1